# EUROPÄISCHE PATENTSCHRIFT

(11) **EP 3 163 094 B1**
(45) Veröffentlichungstag und Bekanntmachung des Hinweises auf die Patenterteilung: **06.11.2019**
(21) Anmeldenummer: 16179612.3
(22) Anmeldetag: 15.07.2016
(51) Int. Cl.: F16B 2/06, B62D 25/16

(54) **BEFESTIGUNGSVORRICHTUNG**
ATTACHMENT DEVICE
DISPOSITIF DE FIXATION

(30) Priorität: 29.10.2015 DE 102015118505
(43) Veröffentlichungstag der Anmeldung: 03.05.2017
(73) Patentinhaber: Franz sauermann GmbH, 86558 Freinhausen (DE)
(72) Erfinder: SAUERMANN, Franz, 86558 Freinhausen (DE)
(74) Vertreter: TBK

(56) Entgegenhaltungen:
- DE-U1- 8 708 265
- DE-U1- 20 112 559
- DE-U1-202009 007 021

## Beschreibung

### GEBIET DER ERFINDUNG

Die vorliegende Erfindung betrifft eine Vorrichtung zum Befestigen zweier Bauteile aneinander und betrifft insbesondere eine Vorrichtung zum Befestigen eines Kotflügels an einem Montagerohr.

### STAND DER TECHNIK

Die Druckschrift DE 297 08 681 U1 offenbart einen Kotflügel für einen LKW, der über zwei gleiche Kotflügelstützteile gestützt wird, die in gegenseitigem Abstand an einem Montagerohr eines LKWs angebracht werden können. Jedes Kotflügelstützteil weist eine Buchse mit einer Bohrung zur Aufnahme des Montagerohrs auf, wobei die Buchse um das Montagerohr herum mittels eines Bolzens verbolzt werden kann. Dieser Bolzen führt durch das Kotflügelstützteil sowie durch den Kotflügel selbst hindurch, welcher längliche Schlitze aufweist, so dass bei einem Befestigen des Kotflügels über dem Kotflügelstützteil der Bolzen durch das Kotflügelstützteil als auch den Kotflügel selbst hindurch geführt und verschraubt wird. Demzufolge weist der Kotflügel für jedes Kotflügelstützteil einen länglichen Schlitz auf, durch den der Kotflügel in einer Position eingestellt werden kann.

Aus dem Dokument DE 87 08 265 U1 ist eine Vorrichtung zum Befestigen zweier Bauteile aneinander bekannt, die einen Basisabschnitt sowie einen ersten und zweiten Klemmabschnitt aufweist und des Weiteren über ein Kraftaufbringungselement verfügt, wobei der erste Klemmabschnitt auf einer Seite des Basisabschnitts vorgesehen ist und geeignet ist ein erstes Bauteil zwischen sich und dem Basisabschnitt zu klemmen. Der zweite Klemmabschnitt ist auf der anderen Seite des Basisabschnitts vorgesehen, die entgegengesetzt zu der einen Seite vorgesehen ist und geeignet ist, ein zweites Bauteil zwischen sich und dem Basisabschnitt zu klemmen. Das Kraftaufbringungselement verläuft von dem ersten Klemmabschnitt durch den Basisabschnitt hindurch zu dem zweiten Klemmabschnitt und ist in der Lage, eine Kraft zu erzeugen, durch die der erste und der zweite Klemmabschnitt aufeinander zubewegt werden. Dabei ragt das Kraftaufbringungselement nicht über eine Außenfläche des ersten oder zweiten Klemmabschnitts hinaus, die entgegengesetzt zu der Fläche des ersten oder zweiten Klemmabschnitts ist, welche dem Basisabschnitt zugewandt ist.

Auch das Dokument DE 201 12 559 U1 offenbart eine derartige gattungsgemäße Vorrichtung.

Aus dem Dokument DE 20 2009 007 021 U1 ist eine gattungsgemäße Vorrichtung bekannt, bei der ein erster und ein zweiter Klemmabschnitt einstückig an einem Basisabschnitt ausgebildet sind.

### Aufgabe der Erfindung

Aufgabe der Erfindung ist es den Stand der Technik derart weiterzubilden, dass eine Klemmwirkung zwischen einem der zu befestigenden Bauteile und der Vorrichtung besser realisiert werden kann.

Die vorangehende und weitere Aufgaben der vorliegenden Erfindung werden durch eine Vorrichtung gemäß Anspruch 1 gelöst. Vorteilhafte Weiterbildungen sind Gegenstand der Unteransprüche.

Gemäß der vorliegenden Erfindung wird eine Vorrichtung zum Befestigen zweier Bauteile aneinander vorgesehen, die folgendes aufweist: einen Basisabschnitt, einen ersten Klemmabschnitt, einen zweiten Klemmabschnitt, und mindestens ein Kraftaufbringungselement. Der erste Klemmabschnitt ist auf einer Seite des Basisabschnitts vorgesehen. Der zweite Klemmabschnitt ist auf der anderen Seite des Basisabschnitts vorgesehen, die entgegengesetzt zu der einen Seite vorgesehen ist. Das Kraftaufbringungselement ist durch den Basisabschnitt hindurch vorgesehen bzw. verläuft von dem ersten zu dem zweiten Klemmabschnitt hin durch den Basisabschnitt hindurch und ist in der Lage, eine Kraft zu erzeugen, durch die der erste und der zweite Klemmabschnitt aufeinander zu bewegt werden, bzw. eine Kraft zu erzeugen, die den ersten Klemmabschnitt und den zweiten Klemmabschnitt jeweils zu dem Basisabschnitt hin drängen kann. Außerdem ragt das Kraftaufbringungselement nicht über eine Außenfläche von dem ersten oder zweiten Klemmabschnitt hinaus, welche entgegengesetzt zu einer Fläche von dem ersten oder zweiten Klemmabschnitt ist, welche dem Basisabschnitt zugewandt ist.

Die Vorrichtung ist derart gestaltet, dass der erste Klemmabschnitt auf der Seite, die dem Basisabschnitt zugewandt ist, an den in Querrichtung vorgesehenen Rändern Vorsprünge aufweist, die zu dem Basisabschnitt hin vorragen, und dass der Basisabschnitt auf der Seite, die dem ersten Klemmabschnitt zugewandt ist, an den in Querrichtung vorgesehenen Rändern Vorsprünge aufweist, die zu dem ersten Klemmabschnitt hin vorragen. Das Bauteil, das zwischen Basisabschnitt und ersten Klemmabschnitt geklemmt werden soll, wird folglich mittels Linienkontakten geklemmt und nicht mittels Flächenkontakten. Daher kann die Klemmwirkung besser realisiert werden, da die Krafteinleitung konzentrierter durchgeführt wird.

Die seitlich vorgesehenen Vorsprünge des ersten Klemmabschnitts sind zu seitlich vorgesehenen Vorsprüngen des Basisabschnitts in der Querrichtung der Vorrichtung zueinander versetzt. Mit dieser Anordnung wird erreicht, dass sich der Befestigungsflansch des zu befestigenden Bauteils in eben dieser Querrichtung deformiert. Dadurch wird der Befestigungsflansch lokal derart deformiert, dass ein Lösen der Vorrichtung aus dem Klemmzustand durch diese lokale Deformation weiter erschwert wird aufgrund einer veränderten Flanschgeometrie.

Da das Kraftaufbringungselement nicht über die Außenfläche von dem entsprechenden ersten oder zweiten Klemmabschnitt hinausragt, kann die Außenfläche eben gestaltet sein bzw. ohne irgendwelche Endstücke des Kraftaufbringungselements auskommen, welche die gleichmäßige Außenfläche des entsprechenden Klemmabschnitts beeinträchtigen könnte. Aus diesem Grund besteht die Möglichkeit, dass eben diese Außenfläche eine gewölbte Fläche ohne Erhebungen bildet, welche der Außenfläche eines zu befestigenden Kotflügels entspricht. Der Kotflügel ist ein Bespiel des "ersten Bauteils", das zwischen den Basisabschnitt und den ersten Klemmabschnitt geklemmt werden kann. Mit anderen Worten ist das Kraftaufbringungselement derart an dem Klemmabschnitt mit der ebenen Außenfläche angebracht, dass dieses bei einer Kraftaufbringungsbetätigung des Kraftaufbringungselements nicht selbst gehalten werden muss, um die axiale Kraft und/oder das Drehmoment aufzunehmen, das beispielsweise beim Befestigen einer Mutter an dem Kraftaufbringungselement in diesem erzeugt wird. Um dies zu erreichen, kann zum Beispiel das Kraftaufbringungselement einstückig mit dem Klemmabschnitt mit der glatten Außenfläche vorgesehen sein, oder das Kraftaufbringungselement kann ein Endstück aufweisen, das formschlüssig in dem Klemmabschnitt mit der glatten Außenfläche vorgesehen ist. Dementsprechend ist es denkbar, dass eine Schraube durch den Klemmabschnitt mit der glatten Außenfläche von der glatten Außenfläche aus durch den Klemmabschnitt hindurch eingesetzt ist, wobei ein polygonaler Kopf des Kraftaufbringungselements in eine entsprechende Vertiefung in der glatten Außenfläche des Klemmabschnitts eingesetzt wird. Dadurch ist gewährleistet, dass die glatte Außenfläche ohne störende Erhebungen auskommt, wenn das Kraftaufbringungselement bzw. der Kraftaufbringungsabschnitt befestigt ist.

Ein Abschnitt des zu befestigenden Kotflügels wird zwischen den Klemmabschnitt mit der glatten Außenfläche und den Basisabschnitt der Befestigungsvorrichtung geklemmt. Da die glatte Außenfläche des Klemmabschnitts auf der Außenfläche des Kotflügels vorgesehen ist, wird zumindest ein separater Befestigungsflansch des Kotflügels dazwischengeklemmt. Vorzugsweise erstreckt sich dieser Befestigungsflansch parallel zu der Außenfläche des Kotflügels, so dass eine Einstellarbeit des Kotflügels diesen problemlos entlang seines Umfangs verschiebbar macht.

Besonders vorteilhaft wird der Kotflügel mit der Befestigungsvorrichtung fixiert, wenn parallel zueinander verlaufende Befestigungsflansche des Kotflügels derart angeordnet sind, dass deren Abstand zueinander geringer ist als ein Nutboden, der zwischen den Befestigungsflanschen und dem Kotflügel selbst vorliegt. Auf diese Weise ist gewährleistet, dass der Kotflügel selbst ohne Langlöcher bzw. Schlitze ausgebildet werden kann, so dass weder Schmutz noch Wasser durch den Kotflügel aus dem Radhaus austreten kann.

Die zwischen der Außenfläche des Kotflügels selbst und den radial auswärts vorgesehenen Befestigungsflanschen des Kotflügels gebildete Nut kann auch schwalbenschwanzförmig oder trapezartig sein. Dies ist einer Zentrierung der Vorrichtung beim Befestigen zuträglich.

Der erste Klemmabschnitt und/oder der zweite Klemmabschnitt kann/können vorzugsweise einstückig mit dem Basisabschnitt ausgebildet sein.

Durch diese einstückige Ausbildung wird zum Beispiel eine Herstellung der Vorrichtung dahingehend vereinfacht, dass keine separaten Bauteile bzw. weniger separate Bauteile vorab zusammengesetzt werden müssen.

Wenn erster Klemmabschnitt, zweiter Klemmabschnitt und Basisabschnitt als jeweils separate Bauteile ausgebildet werden, hat dies den Vorteil, dass zum Beispiel eine Spritzgussvorrichtung mit geringerem Aufwand hergestellt werden kann und mit geringerem Aufwand bedient werden kann, insbesondere was ein Ausformen der gegossenen Teile betrifft.

Das Kraftaufbringungselement kann zumindest einen stabförmigen Abschnitt aufweisen, der durch den Basisabschnitt hindurchgeführt wird. Der stabförmige Abschnitt kann sowohl einen runden als auch einen polygonalen Querschnitt haben, je nachdem welcher Verschlussmechanismus ausgewählt wird. Als Verschluss kommt selbstverständlich jegliche Art von Schraubverbindungen in Frage. Daneben besteht die Möglichkeit, mittels einer Ratsche, eines Exzenters bzw. eines Schnellspannverschlusses, ausgehend von dem stabförmigen Abschnitt eine Druckkraft auf die Klemmabschnitte aufzubringen.

Vorzugsweise kann der stabförmige Abschnitt des Kraftaufbringungselements auf einer Seite des Kraftaufbringungselements einstückig mit einem von dem ersten oder dem zweiten Klemmabschnitt ausgebildet sein. Dies hat den besonders vorteilhaften Effekt zur Folge, dass die Vorrichtung zum Befestigen zweier Bauteile aneinander im Wesentlichen in ihrer Gesamtheit durch zum Beispiel ein Spritzgussverfahren ausgebildet werden kann. Im Falle einer Massenproduktion der Vorrichtung treten die erhöhten Kosten für eine kompliziertere Spritzgussform in den Hintergrund, und die Kosteneinsparungen finden einen größeren Niederschlag, welche dadurch erreicht werden, dass die Vorrichtung nicht aus einer Vielzahl von Einzelteilen zusammengesetzt werden muss, bevor diese einsatzbereit ist.

Die Vorrichtung kann jedoch auch ein Kraftaufbringungselement aufweisen, der als ein separates Bauteil ausgebildet ist, das auf einer Seite des Kraftaufbringungselements formschlüssig mit einem von dem ersten oder dem zweiten Klemmabschnitt in Verbindung steht. Dieser Formschluss kann zum Beispiel sehr einfach dadurch erreicht werden, dass ein polygonaler Schraubenkopf in eine entsprechende Vertiefung in dem Klemmabschnitt eingesetzt wird, so dass die Außenfläche des Klemmabschnitts keinerlei Erhebung aufweist, die über die Außenfläche hinausragen würde.

Vorzugsweise kann in den vorangehenden Ausführungen des Kraftaufbringungselements die andere Seite des Kraftaufbringungselements mit einem Gewinde versehen sein und eine Mutter kann mit dem Gewinde derart schraubbar sein, dass sich sowohl der erste Klemmabschnitt als auch der zweite Klemmabschnitt auf den Basisabschnitt zu bewegen.

Alternativ kann die andere Seite des Kraftaufbringungselements mit einer Schnellspannvorrichtung, einem Exzenter oder einer Ratsche versehen sein, so dass sich sowohl der erste Klemmabschnitt als auch der zweite Klemmabschnitt auf den Basisabschnitt zu bewegen.

Bezüglich dieser beiden Alternativen soll erwähnt werden, dass eine Schraublösung im Allgemeinen kostengünstiger ist, wohingegen eine Schnellspannvorrichtung in der Herstellung etwas aufwändiger ist, jedoch in der Anbringung sehr viel einfacher zu handhaben ist. Diese vereinfachte Handhabung ist in einem Fall entscheidend, in dem die Zugänglichkeit zu dem Kraftaufbringungselement in einer Montageposition der Vorrichtung beschwerlich ist.

In Anbetracht der vorangehend genannten Möglichkeiten ist es außerdem möglich, einen Klemmabschnitt einstückig mit dem Basisabschnitt auszubilden und den anderen Klemmabschnitt und den Basisabschnitt mit einem gegenseitigen Eingriffsmechanismus zu versehen, der zu dem Kraftaufbringungselement verschieden ist und der in der Lage ist, ein sich Entfernen von dem anderen Klemmabschnitt und dem Basisabschnitt zu verhindern. Diese Art von Eingriffsmechanismus kann zum Beispiel eine Laschenkonstruktion sein, wobei zum Beispiel eine Lasche eines Klemmabschnitts durch ein Durchgangsloch in dem Basisabschnitt hindurch eingesetzt wird und die Lasche anschließend auf der von dem Klemmabschnitt abgewandten Seite des Basisabschnitts mit diesem in Eingriff gelangt. Alternativ dazu kann dieser Eingriffsmechanismus ebenfalls ein Gelenkmechanismus sein.

Vorzugsweise ist einer von dem ersten oder dem zweiten Klemmabschnitt derart ausgebildet, dass ein zylindrisches Bauteil, wie zum Beispiel ein Montagerohr, zwischen den einen Klemmabschnitt und den Basisabschnitt geklemmt werden kann. Dieses zylindrische Bauteil bzw. Montagerohr ist ein Beispiel des "zweiten Bauteils", das zwischen den Basisabschnitt und den zweiten Klemmabschnitt geklemmt wird.

Besonders vorteilhaft ist es, wenn zwischen Klemmabschnitt bzw. Basisabschnitt und dem zylindrischen Bauteil eine separate Schicht, Film oder Bauteil vorgesehen wird, womit eine Reibung gegenüber dem Klemmabschnitt/Basisabschnitt und dem zylindrischen Bauteil derart erhöht wird, dass ein Verdrehen der Vorrichtung zum Befestigen und dem zylindrischen Bauteil erschwert wird.

Wenn eine derartige Schicht bzw. separates Bauteil zur Erhöhung der Reibung vorgesehen wird, ist es besonders vorteilhaft, wenn diese Schicht bzw. dieses Bauteil einen Kontakt zu dem Klemmabschnitt bzw. Basisabschnitt derart herstellt, indem besondere Konturen in der Kontaktfläche vorhanden sind. Wenn ein zylindrisches Bauteil, wie zum Beispiel ein Montagerohr, zwischen den Klemmabschnitt und den Basisabschnitt geklemmt werden soll, können beispielsweise längliche Vertiefungen bzw. Erhebungen in dem Klemmabschnitt/Basisabschnitt und dem Reibbauteil bzw. der Reibschicht vorgesehen sein, welche in axialer Richtung des zylindrischen Bauteils verlaufen, wodurch die Verdrehsicherheit zusätzlich erhöht wird.

Diese Schicht, welche eine Reibung erhöhen soll und damit eine Verdrehung verhindern soll, ist vorzugsweise aus einem elastischen Material, wie zum Beispiel Gummi, hergestellt.

In einer weiteren vorteilhaften Ausgestaltung weist einer von dem ersten oder dem zweiten Klemmabschnitt ein Durchgangsloch mit einem großdurchmessrigen Teil und einem kleindurchmessrigen Teil auf. Durch den großdurchmessrigen Teil kann ein pilzförmiger Eingriffsabschnitt des Basisabschnitts eingesetzt werden. Dieser pilzförmige Eingriffsabschnitt des Basisabschnitts kann dann zu dem kleindurchmessrigen Teil des Durchgangslochs hin verschoben werden, so dass sich der Basisabschnitt und der Klemmabschnitt nicht mehr voneinander entfernen können. Alternativ kann diese Art von Eingriffsmechanismus auch in umgekehrter Art und Weise erfolgen, wobei das Durchgangsloch in dem Basisabschnitt vorgesehen ist und der pilzförmige Eingriffsabschnitt in einem von dem ersten oder dem zweiten Klemmabschnitt vorgesehen ist.

Diese Art von Eingriffsvorrichtung kann auch derart vorgesehen sein, dass der Basisabschnitt auf jeder Seite, die einem Klemmabschnitt zugewandt ist, einen pilzförmigen Eingriffsabschnitt aufweist, und jeder von dem ersten und dem zweiten Klemmabschnitt ein Durchgangsloch aufweist, das einen großen Teil und einen kleinen Teil aufweist, wodurch der pilzförmige Eingriffsabschnitt eingesetzt und in Eingriff gelangen kann.

Vorzugsweise ist die Vorrichtung derart gestaltet, dass einer von dem ersten Klemmabschnitt oder dem Basisabschnitt mittig in dessen Querrichtung, die senkrecht zu dessen Längsrichtung vorgesehen ist, eine stegartige Erhebung aufweist, die zu dem anderen von dem ersten Klemmabschnitt oder dem Basisabschnitt hin vorragt, so dass bei einer Klemmbetätigung die stegartige Erhebung mit dem anderen von dem ersten Klemmabschnitt oder dem Basisabschnitt in Kontakt gelangt. Da die stegartige Erhebung generell nahe an dem Kraftaufbringungselement positioniert ist, ist übermäßige Deformation der Vorrichtung durch das Festziehen des Kraftaufbringungselements ausgeschlossen, wenn die stegartige Erhebung mit dem gegenüberliegenden Abschnitt in Kontakt steht.

Die Erfindung umfasst ferner ein System, das eine Vorrichtung nach einem der vorangehenden Aspekte und einen Kotflügel aufweist. Der Kotflügel weist mindestens eine Führungsnut mit einem T-förmigen oder trapezförmigen Querschnitt auf, in der einer von dem ersten oder zweiten Klemmabschnitt geführt ist und mit deren Befestigungsflanschen klemmbar ist. Die vorangehend dargestellte Vorrichtung kann zur Befestigung eines Fahrzeugkotflügels an einem zylindrischen Bauteil, insbesondere einem Montagerohr, verwendet werden.

### KURZE BESCHREIBUNG DER ZEICHNUNGEN

Fig. 1 ist eine perspektivische Ansicht der Vorrichtung zum Befestigen zweier Bauteile aneinander gemäß einer ersten Ausführungsform.
Fig. 2 ist eine Seitenansicht der Vorrichtung, welche in Fig. 1 gezeigt ist.
Fig. 3 ist eine Draufsicht der Vorrichtung, die in Fig. 1 gezeigt ist.
Fig. 4 ist eine Seitenansicht der Vorrichtung, die in Fig. 1 gezeigt ist, von einer Seite aus, die zu jener in Fig. 2 senkrecht ist.
Fig. 5 ist eine Schnittansicht der Vorrichtung, welche in Fig. 1 gezeigt ist, entlang einer Linie A-A, die in Fig. 3 ersichtlich ist.
Fig. 6 ist eine perspektivische Ansicht einer Vorrichtung zum Befestigen zweier Bauteile aneinander gemäß einer zweiten Ausführungsform.
Fig. 7 ist eine Seitenansicht der Vorrichtung, die in Fig. 6 gezeigt ist.
Fig. 8 ist eine Draufsicht der Vorrichtung, die in Fig. 6 gezeigt ist.
Fig. 9 ist eine Seitenansicht der Vorrichtung, die in Fig. 6 gezeigt ist, in einer Richtung, die zu jener senkrecht ist, in der Fig. 7 betrachtet wird.
Fig. 10 ist eine Schnittansicht der Vorrichtung, die in Fig. 6 gezeigt ist, entlang einer Linie B-B, die in Fig. 8 dargestellt ist.
Fig. 11 ist eine schematische Darstellung, die im Allgemeinen auf die erste und zweite Ausführungsform zutrifft, in der eine Vorrichtung zum Befestigen zweier Bauteile aneinander in eine Führungsnut eines Kotflügels eingesetzt ist, welcher eines der zwei Bauteile darstellt, die aneinander zu befestigen sind.

### DETAILLIERTE BESCHREIBUNG DER AUSFÜHRUNGSFORMEN

### Erste Ausführungsform

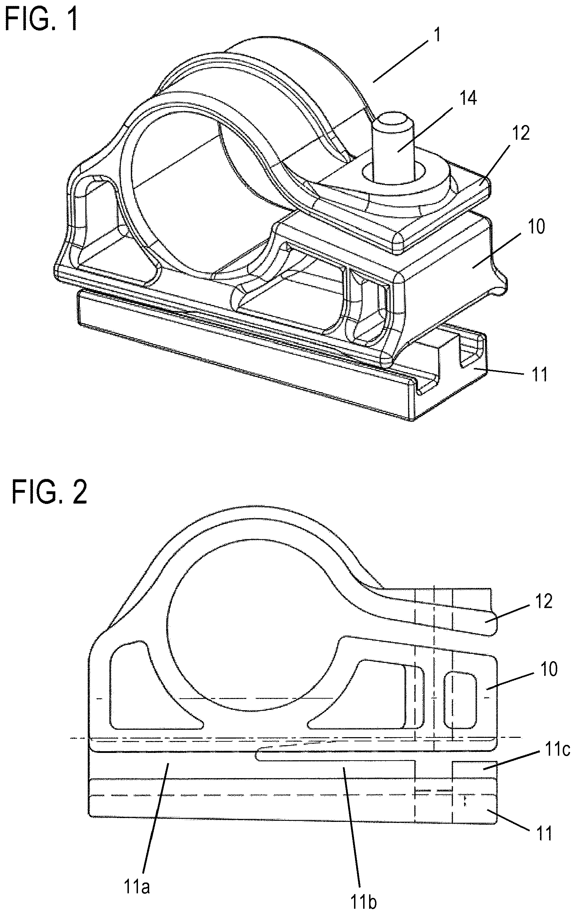

Fig. 1 zeigt die Vorrichtung zum Befestigen zweier Bauteile aneinander in einer ersten Ausführungsform. Wie aus Fig. 1 heraus ersichtlich ist, steht an einem oberen Ende der Vorrichtung 1 ein stabförmiger Abschnitt 14 heraus, welcher durch den Basisabschnitt 10 und den zweiten Klemmabschnitt 12 hindurchführt. Bezugszeichen 11 stellt den ersten Klemmabschnitt dar, mit welchem der stabförmige Abschnitt 14 einstückig verbunden ist, wie später erläutert werden wird. Der Basisabschnitt 10 und der zweite Klemmabschnitt 12 sind in der vorliegenden Ausführungsform ebenfalls einstückig ausgebildet, so dass neben dem stabförmigen Abschnitt eine zylindrische Öffnung vorgesehen ist, durch die ein Montagerohr eingesetzt und geklemmt werden kann. Das an dem oberen Ende herausstehende axiale Ende des stabförmigen Abschnitts 14 ist ohne ein Außengewinde dargestellt. An diesem Ende ist ein Element zu befestigen, durch welches eine Drückkraft auf den zweiten Klemmabschnitt 12 und eine Zugkraft innerhalb des stabförmigen Abschnitts 14 erzeugt werden kann. In Verbindung mit einem Außengewinde an dem oberen axialen Ende des stabförmigen Abschnitts 14 kann eine Mutter diese Kräfte erzeugen.

An dem herausstehenden oberen axialen Ende des stabförmigen Abschnitts 14 könnte jedoch auch ein Durchgang in Durchmesserrichtung vorgesehen sein, an dem ein Exzenter bzw. eine Schnellspannvorrichtung angebracht wird, welche eine Druckkraft auf den zweiten Klemmabschnitt 12 aufbringen kann. Da der stabförmige Abschnitt 14 einstückig mit dem ersten Klemmabschnitt 11 in Verbindung steht, führt die in dem stabförmigen Abschnitt 14 erzeugte Zugkraft dazu, dass der erste Klemmabschnitt 11 in Richtung zu dem Basisabschnitt 10 hin bewegt wird und ein dazwischenliegendes Bauteil klemmt.

Fig. 2 stellt die Vorrichtung gemäß der ersten Ausführungsform in einer Seitenansicht dar, aus welcher heraus ersichtlich wird, dass durch den Basisabschnitt 10 und den zweiten Klemmabschnitt 12 ein koaxiales Durchgangsloch vorgesehen ist, durch das der stabförmige Abschnitt 14 eingesetzt ist. Die Rechts-Links-Richtung in Fig. 2 entspricht der Richtung, in der die Vorrichtung in einer Führungsnut geführt werden kann, deren Flansche (Befestigungsflansche) die zu klemmenden Elemente zwischen dem Basisabschnitt 10 und dem ersten Klemmabschnitt 11 darstellen.

Das Kraftaufbringungselement 13, der im Wesentlichen aus dem stabförmigen Abschnitt 14 besteht, ist auf der rechten Seite in der Vorrichtung von Fig. 2 angeordnet. Auf der linken Seite in Fig. 2 ist ersichtlich, dass der Basisabschnitt 10, welcher eine entsprechende Höhe aufweist, einstückig durch einen Steg mit dem ersten Klemmabschnitt 11 in Verbindung steht. Bei einem Anziehen einer Schraube an dem oberen Ende des stabförmigen Abschnitts 14 wird der erste Klemmabschnitt 11 in Richtung auf den Basisabschnitt 10 zu bewegt, wodurch der Steg auf der linken Seite in Fig. 2 entsprechend deformiert wird.

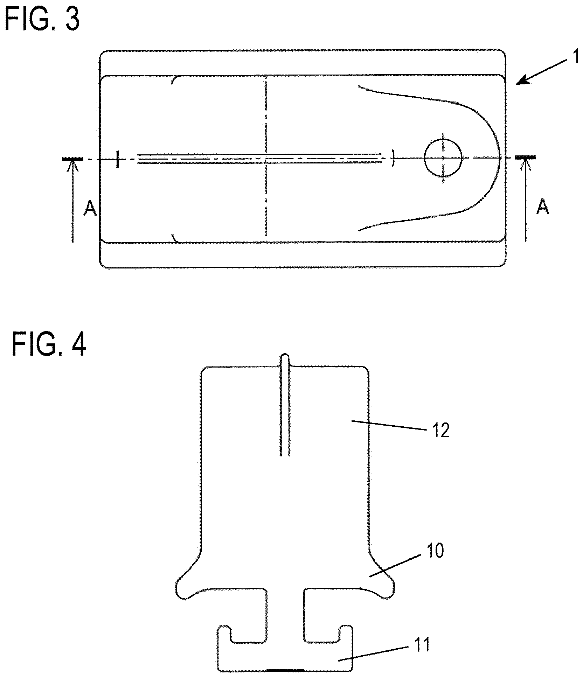

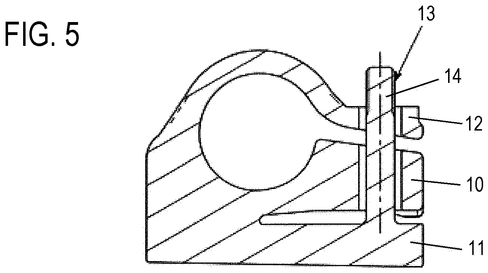

Fig. 3 zeigt die Vorrichtung 1 in einer Draufsicht. Aus Fig. 3 heraus wird eine Schnittführung A-A ersichtlich, deren Schnitt in Fig. 5 dargestellt wird.

Fig. 4 ist eine seitliche Ansicht der Vorrichtung 1, wenn in einer Richtung betrachtet, in der die Vorrichtung 1 in eine Führungsnut eines zu verbindenden Bauteils, wie zum Beispiel einem Kotflügel, eingesetzt wird. Zwischen Basisabschnitt 10 und dem ersten Klemmabschnitt 11 ist ein Steg ausgebildet, der in Fig. 2 auf der linken Seite die Verbindung darstellt.

Fig. 5 zeigt nun den Schnitt entlang A-A in Fig. 3. Aus dieser Figur heraus wird klar ersichtlich, dass der Basisabschnitt 10, der erste Klemmabschnitt 11, der zweite Klemmabschnitt 12 sowie das Kraftaufbringungselement 13 mit dem stabförmigen Abschnitt 14 einstückig ausgebildet sind. Diese einstückige Form kann durch eine Spritzgusstechnik erreicht werden. Wie aus Fig. 5 heraus ebenfalls ersichtlich ist, ist der stabförmige Abschnitt 14 des Kraftaufbringungselements 13 an seinem unteren Ende mit dem ersten Klemmabschnitt 11 einstückig ausgebildet und führt in axialer Richtung aufwärts durch ein Durchgangsloch in dem Basisabschnitt 10 wie auch ein Durchgangsloch in dem zweiten Klemmabschnitt 12 hindurch und steht an seinem oberen axialen Ende derart heraus, dass ein entsprechendes Befestigungsmittel angebracht werden kann (Schraube, Ratsche, Exzenter, Schnellspannvorrichtung). An dem oberen axialen Ende des Kraftaufbringungselements 13 ist ein Gewinde abgebildet, welches in nicht geklemmten Zustand in das Durchgangsloch des zweiten Klemmabschnitts 12 hinein vorgesehen ist.

### Zweite Ausführungsform

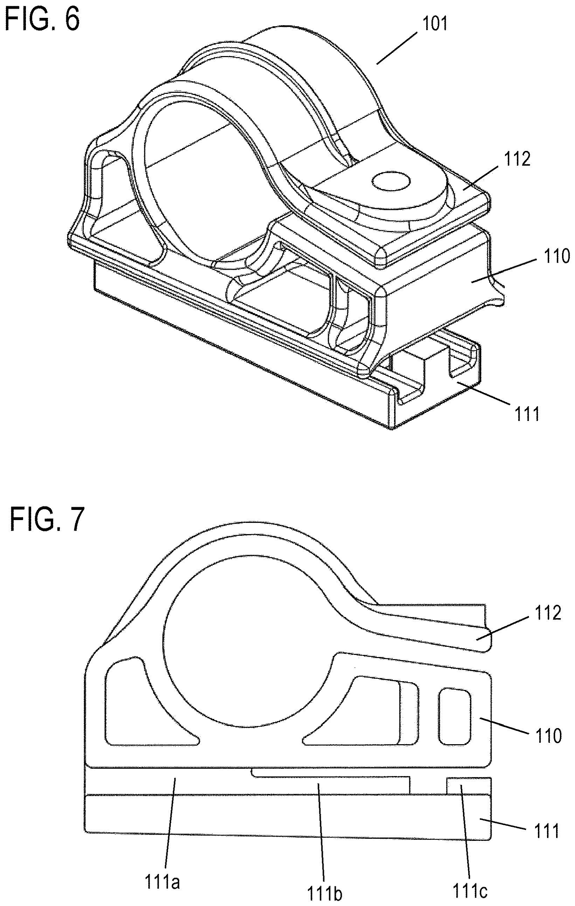

Fig. 6 zeigt eine perspektivische Ansicht einer Vorrichtung 101 gemäß der zweiten Ausführungsform der Erfindung. Aus Fig. 6 heraus geht hervor, dass durch das eingezeichnete Durchgangsloch auf der Oberseite des zweiten Klemmabschnitts 112 kein stabförmiges Element hervorragt.

Fig. 7 ist eine Seitenansicht der Vorrichtung 101, welche in Fig. 6 abgebildet ist. Wie auch in der ersten Ausführungsform ist die zweite Ausführungsform derart aufgebaut, dass ein Klemmspalt zwischen dem Basisabschnitt 110 und dem zweiten Klemmabschnitt 112 in etwa auf die Mittelachse des zylindrischen Durchgangs gerichtet ist. Mit anderen Worten ist der Klemmspalt in radial ausgehender Richtung von dem zylindrischen Einsetzabschnitt zwischen dem Basisabschnitt 110 und dem zweiten Klemmabschnitt 112 vorgesehen. Mit dieser Anordnung kann die beste Klemmwirkung erreicht werden.

In Fig. 7 ist auch der erste Klemmabschnitt 111 abgebildet, der wie in der ersten Ausführungsform auf der linken Seite mit dem Basisabschnitt 110 einstückig verbunden ist. Im Anschluss an diesen Verbindungssteg auf dessen rechter Seite in Fig. 7 ist ersichtlich, dass der Klemmabschnitt 111 (wie auch der Klemmabschnitt 11) mit einem stegartigen Flansch versehen ist, der sich in der gleichen Richtung erstreckt, wie der Verbindungssteg zwischen dem Basisabschnitt 110 und dem ersten Klemmabschnitt 111. Die danebenliegende Ausnehmung bildet einen Durchgang, durch den ein separates Kraftaufbringungsbauteil bzw. ein separates Kraftaufbringungselement hindurchführt. Von dem rechten Ende dieser Ausnehmung bis zu dem rechten Rand der Vorrichtung bzw. des ersten Klemmabschnitts 111 hin ist wiederum ein stegartiger Flansch ausgebildet, der sich in der gleichen Richtung wie der stegartige Verbindungsabschnitt und der stegartige Flansch auf der entgegengesetzten Seite des Kraftaufbringungselementsdurchgangs. Dieser flanschartige Steg dient als Beschränkungsabschnitt, der ein übermäßiges Anziehen einer Schraube oder eines anderen Befestigungsmittels an der axialen Oberseite des Kraftaufbringungselements beschränken soll. Die Stege 111a, 111b und 111c haben in einer Breitenrichtung die gleiche Dicke.

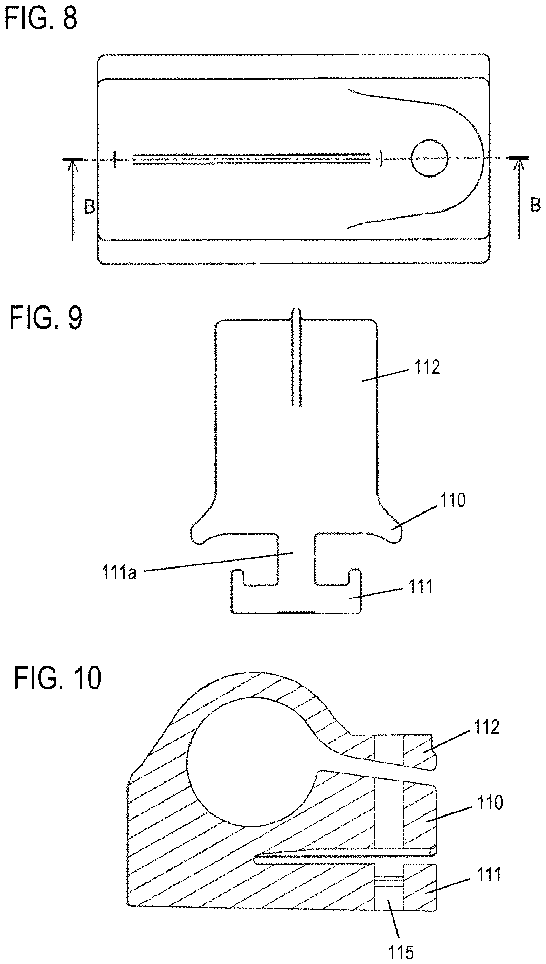

Fig. 8 zeigt die Vorrichtung 101 gemäß der zweiten Ausführungsform in einer Draufsicht. Aus Fig. 8 heraus wird eine Schnittführung B-B veranschaulicht, deren Schnitt in Fig. 10 dargestellt ist.

Fig. 9 zeigt ebenfalls, ähnlich wie Fig. 4, den Basisabschnitt 110, den ersten Klemmabschnitt 111 und den zweiten Klemmabschnitt 112 gemäß der zweiten Ausführungsform. Aus dieser Ansicht heraus kann der Verbindungssteg 111a ersehen werden, der zwischen dem Basisabschnitt 110 und dem ersten Klemmabschnitt 111 verbindet und der die gleiche Breite wie die Abstandsbeschränkungsstege 111b und 111c hat.

Fig. 10 zeigt den Schnitt, der in Fig. 8 entlang Linie B-B genommen ist. Der Schnitt, der in Fig. 10 gezeigt ist, unterscheidet sich nur wenig von dem Schnitt, der in Fig. 5 gezeigt ist. Im Gegensatz zu der ersten Ausführungsform ist in der zweiten Ausführungsform das Durchgangsloch nicht lediglich durch den Basisabschnitt und den zweiten Klemmabschnitt, sondern auch durch den ersten Klemmabschnitt hindurch vorgesehen, so dass ein separates Kraftaufbringungselement 113 eingesetzt und angezogen werden kann. Das in Fig. 10 gezeigte Durchgangsloch 115 in dem ersten Klemmabschnitt 111 ist mit einer Formschlussvertiefung versehen, die sich senkrecht zu der Schnittebene hin erstreckt. In dieser Ausführungsform wird der Formschluss zwischen einem separaten Kraftaufbringungsbauteil bzw. -abschnitt 114 und dem ersten Klemmabschnitt 111 dadurch erreicht, dass das untere Ende des Kraftaufbringungsbauteils 114 T-förmig ausgebildet ist. Dadurch wird erreicht, dass sich das Kraftaufbringungsbauteil bei einem Anziehen von zum Beispiel einer Schraube an einem Außengewinde, das in einem oberen axialen Bereich des Kraftaufbringungsbauteils 114 vorgesehen ist, nicht verdreht. Außerdem wird durch die T-förmige Form des Kraftaufbringungsbauteils erreicht, dass der erste Klemmabschnitt 111 zu dem Basisabschnitt 110 hin bewegt wird und dadurch ein dazwischenliegendes Bauteil eingeklemmt wird. Wie auch aus der ersten Ausführungsform aus Fig. 5 heraus ersichtlich ist, sind die Durchgangslöcher, welche in Fig. 10 in den Abschnitten 110, 111, 112 vorgesehen sind, mit einem Durchmesser vorgesehen, welcher größer als jener des Kraftaufbringungsbauteils ist, um den Achsenversatz bzw. die Achsenverdrehung bei einem Klemmvorgang auszugleichen.

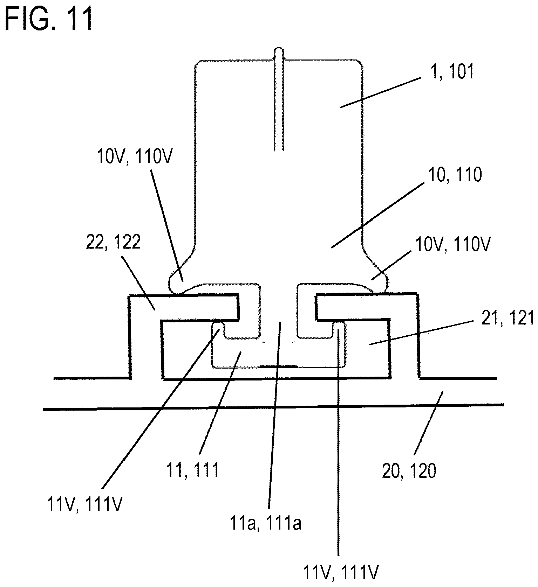

Fig. 11 zeigt eine Seitenansicht eines Zustands, in dem eine Vorrichtung gemäß der ersten oder zweiten Ausführungsform in eine Führungsnut 21, 121 eines Kotflügels 20, 120 eingesetzt ist. Zwischen dem Basisabschnitt 10, 110 und dem ersten Klemmabschnitt 11, 111 sind auf beiden Seiten Flansche 22, 122 des Kotflügels 20, 120 angeordnet und sind dazwischen geklemmt. Aus dieser Ansicht heraus wird klar ersichtlich, dass zum Einen der Kotflügel keinen Schlitz oder Langloch aufweist, weshalb weder Schmutz noch Wasser durch den Kotflügel nach außen dringt. Außerdem ist ersichtlich, dass die Unterseite/Außenseite des ersten Klemmabschnitts 11, 111, die dem Führungsnutboden zugewandt ist, keine Erhebung aufweist, die aus der Fläche herausragen würde. Dies erleichtert ein Einsetzen der Vorrichtung in die Führungsnut in einem Zustand, in dem der Basisabschnitt und der erste Klemmabschnitt nicht die Flansche 22, 122 des Kotflügels 20, 120 klemmen. In diesem Zustand kann die Vorrichtung leicht in die Führungsnut eingesetzt und darin verschoben werden, um eine Lage des Kotflügels relativ zu dem Montagerohr einzustellen. Das Montagerohr ist das zweite Bauteil, das über die Vorrichtung mit dem Kotflügel verbunden werden soll.

Wie aus Fig. 11 heraus weiter ersichtlich ist, weisen der Basisabschnitt und der erste Klemmabschnitt jeweils Vorsprünge auf. Fig. 11 zeigt die Vorrichtung 1, 101 in einer Seitenansicht, wobei jedoch der Kotflügel 20, 120 in einer geschnittenen Darstellung gezeigt ist. Sowohl die Vorsprünge 11V, 111V des ersten Klemmabschnitts 11, 111 als auch die Vorsprünge 10V, 110V des Basisabschnitts 10, 110 sind an den äußersten Rändern der jeweiligen Abschnitte in deren Querrichtung ausgebildet. Die Vorrichtungsquerrichtung ist in Fig. 11 von links nach rechts dargestellt.

Die entsprechenden Vorsprünge des ersten Klemmabschnitts wie auch des Basisabschnitts sind an den äußersten Rändern in der Querrichtung vorgesehen.

Während die Vorsprünge 11V, 111V des ersten Klemmabschnitts in Richtung direkt auf die zugewandte Fläche des Basisabschnitts 10, 110 zu ausgerichtet sind, sind die Vorsprünge 10V, 110V des Basisabschnitts nicht lediglich mit einer Richtungskomponente auf den ersten Klemmabschnitt zu, sondern auch mit einer Richtungskomponente von dem Basisabschnitt/der Vorrichtung weg versehen. Dadurch wird es möglich, dass die Vorsprünge 10V, 110V einen größeren Abstand zueinander haben als die allgemeine Breite der Vorrichtung bzw. des Basisabschnitts.

Im Vergleich dazu sind die Abstände der Vorsprünge 11V, 111V des ersten Klemmabschnitts mit einem geringeren gegenseitigen Abstand versehen. Der dadurch entstandene Versatz in Vorrichtungsquerrichtung zwischen den Vorsprüngen 11V, 111V des ersten Klemmabschnitts und den Vorsprüngen 10V, 110V des Basisabschnitts führt dazu, dass die geklemmten Befestigungsflansche 22, 122 des Kotflügels in Richtung zu der Mitte der Nut hin deformiert werden, wenn die Vorrichtung fixiert wird und der erste Klemmabschnitt sich auf den Basisabschnitt zu bewegt. Die distalen Enden der beiden Befestigungsflansche 22, 122 nahe der Vorrichtungsmitte werden dementsprechend in der Anordnung von Fig. 11 nach oben hin gebogen. Augrund der somit vorgesehenen Linienkontakte kann die Klemmkraft effizient eingeleitet werden und die Befestigungsvorrichtung neigt weniger zu einem ungewollten Verschieben innerhalb der Befestigungsnut nach einer Befestigung.

Wie aus Fig. 1 und Fig. 6 heraus ersichtlich ist, erstrecken sich die vorangehend genannten Vorsprünge über die gesamte Länge der Vorrichtung. Auch dies ist nicht zwingend notwendig und die Vorsprünge können sich nur in Teilbereichen der Vorrichtung erstrecken bzw. ausgebildet sein. Da die Befestigungsflansche des Kotflügels bzw. des ersten zu befestigenden Bauteils in den Bereichen deformiert werden, in denen die Vorsprünge vorhanden sind, wird auch eine Deformation bezüglich eines Flanschbereiches des Kotflügels erzeugt, in dem die Vorrichtung nicht geklemmt ist. Durch diese Flanschdeformationen, die in Längsrichtung der Vorrichtung vor und hinter der Vorrichtung erzeugt werden, wird es zusätzlich erschwert, die Vorrichtung innerhalb der Kotflügelnut vor und zurück zu bewegen. Mit anderen Worten, ein ungewolltes Verschieben der Vorrichtung innerhalb der Befestigungsnut nach einer Befestigung wird noch stärker verhindert. Somit werden durch die Linienkontakte der Vorsprünge und zusätzlich durch den Vorsprungsversatz in Vorrichtungsquerrichtung (Deformation der Befestigungsflansche) Effekte erzeugt, welche die Befestigungsvorrichtung innerhalb der Kotflügelnut in Quer- und Längsrichtung besonders fixiert, wenn das Kraftaufbringungselement der Vorrichtung angezogen ist.

## Patentansprüche

1. Vorrichtung (1; 101) zum Befestigen zweier Bauteile aneinander, die Folgendes aufweist:
einen Basisabschnitt (10; 110);
einen ersten Klemmabschnitt (11; 111);
einen zweiten Klemmabschnitt (12; 112); und
mindestens ein Kraftaufbringungselement (13);
wobei
der erste Klemmabschnitt (11; 111) auf einer Seite des Basisabschnitts (10; 110) vorgesehen ist und geeignet ist, ein erstes Bauteil zwischen sich und den Basisabschnitt zu klemmen,
der zweite Klemmabschnitt (12; 112) auf der anderen Seite des Basisabschnitts (10; 110) vorgesehen ist, die entgegengesetzt zu der einen Seite vorgesehen ist, und geeignet ist, ein zweites Bauteil zwischen sich und den Basisabschnitt zu klemmen,
das Kraftaufbringungselement (13) von dem ersten Klemmabschnitt (11; 111) durch den Basisabschnitt (10; 110) hindurch zu dem zweiten Klemmabschnitt (11; 111) verläuft und in der Lage ist, eine Kraft zu erzeugen, durch die der erste und der zweite Klemmabschnitt aufeinander zu bewegt werden, und
das Kraftaufbringungselement (13) nicht über eine der Außenflächen des ersten oder zweiten Klemmabschnitts hinausragt, die entgegengesetzt zu der Fläche des ersten oder zweiten Klemmabschnitts ist, welche dem Basisabschnitt (10; 110) zugewandt ist,
**dadurch gekennzeichnet, dass**
der erste Klemmabschnitt (11; 111) auf der Seite, die dem Basisabschnitt (10; 110) zugewandt ist, an den in Querrichtung vorgesehenen Rändern Vorsprünge (11V; 111V) aufweist, die zu dem Basisabschnitt hin vorragen, und
der Basisabschnitt (10; 110) auf der Seite, die dem erstem Klemmabschnitt (11; 111) zugewandt ist, an den in Querrichtung vorgesehenen Rändern Vorsprünge (10V; 110V) aufweist, die zu dem ersten Klemmabschnitt (11; 111) hin vorragen,
wobei Vorsprünge (11V; 111V) des erste Klemmabschnitts (11; 111) zu Vorsprüngen (10V; 110V) des Basisabschnitts (10; 110) in der Querrichtung der Vorrichtung zueinander versetzt sind.

2. Vorrichtung (1; 101) nach Anspruch 1, wobei der erste Klemmabschnitt (11; 111) und/oder der zweite Klemmabschnitt (12; 112) einstückig mit dem Basisabschnitt (10; 110) ausgebildet sind.

3. Vorrichtung (1; 101) nach Anspruch 1, wobei der erste Klemmabschnitt (11; 111), der zweite Klemmabschnitt (12; 112) und der Basisabschnitt (10; 110) jeweils als separate Bauteile vorgesehen sind, die miteinander in Eingriff bringbar sind.

4. Vorrichtung (1; 101) nach einem der Ansprüche 1 bis 3, wobei das Kraftaufbringungselement (13) zumindest einen stabförmigen Abschnitt (14) aufweist, der durch den Basisabschnitt (10; 110) hindurchführt.

5. Vorrichtung (1; 101) nach einem der Ansprüche 1 bis 4, wobei der stabförmige Abschnitt (14) des Kraftaufbringungselements (13) auf einer Seite des Kraftaufbringungselements (13) einstückig mit einem von dem ersten oder zweiten Klemmabschnitt ausgebildet ist.

6. Vorrichtung (1; 101) nach einem der Ansprüche 1 bis 4, wobei das Kraftaufbringungselement (13) als separates Bauteil ausgebildet ist, das auf einer Seite des Kraftaufbringungselements (13) formschlüssig mit einem von dem ersten oder zweiten Klemmabschnitt in Verbindung steht.

7. Vorrichtung (1; 101) nach Anspruch 5 oder 6, wobei die andere Seite des Kraftaufbringungselements (13) mit einem Gewinde versehen ist und eine Mutter mit dem Gewinde derart schraubbar ist, so dass sich sowohl der erste Klemmabschnitt (11; 111) als auch der zweite Klemmabschnitt (12; 112) auf den Basisabschnitt (10; 110) zu bewegen.

8. Vorrichtung (1; 101) nach Anspruch 5 oder 6, wobei die andere Seite des Kraftaufbringungselements (13) mit einer Schnellspannvorrichtung versehen ist, so dass sich sowohl der erste Klemmabschnitt (11; 111) als auch der zweite Klemmabschnitt (12; 112) auf den Basisabschnitt (10; 110) zu bewegen.

9. Vorrichtung (1; 101) nach einem der vorangehenden Ansprüche, wobei ein Klemmabschnitt einstückig mit dem Basisabschnitt (10; 110) ausgebildet ist und wobei der andere Klemmabschnitt und der Basisabschnitt (10; 110) einen Eingriffsmechanismus aufweisen, der zu dem Kraftaufbringungselement (13) verschieden ist und der in der Lage ist, ein sich Entfernen von dem anderen Klemmabschnitt und dem Basisabschnitt (10; 110) zu verhindern.

10. Vorrichtung (1; 101) nach einem der vorangehenden Ansprüche, wobei einer von dem ersten oder dem zweiten Klemmabschnitt derart ausgebildet ist, dass ein zylindrisches Bauteil zwischen den einen Klemmabschnitt und den Basisabschnitt (10; 110) geklemmt werden kann.

11. Vorrichtung (1; 101) nach Anspruch 10, wobei zwischen Klemmabschnitt und/oder Basisabschnitt (10; 110) und dem zu klemmenden zylindrischen Bauteil eine dünne Schicht aus Gummi vorgesehen ist.

12. Vorrichtung (1; 101) nach einem der vorangehenden Ansprüche, wobei einer von dem ersten oder dem zweiten Klemmabschnitt ein Durchgangsloch aufweist mit einem großdurchmessrigen Teil, durch den ein pilzförmiger Eingriffsabschnitt des Basisabschnitts (10; 110) eingesetzt werden kann, und einem kleindurchmessrigen Teil, zu dem der pilzförmige Eingriffsabschnitt des Basisabschnitts (10; 110) hin verschoben werden kann, so dass sich der Basisabschnitt (10; 110) und der Klemmabschnitt nicht mehr von einander entfernen können.

13. Vorrichtung (1; 101) nach einem der vorangehenden Ansprüche, wobei einer von dem ersten Klemmabschnitt (11; 111) oder dem Basisabschnitt (10; 110) mittig in dessen Querrichtung, die senkrecht zu dessen Längsrichtung vorgesehen ist, eine stegartige Erhebung (111b, 111c) aufweist, die zu dem anderen von dem ersten Klemmabschnitt (11; 111) oder dem Basisabschnitt (10; 110) hin vorragt, so dass bei einer Klemmbetätigung die stegartige Erhebung (111b, 111c) mit dem anderen von dem ersten Klemmabschnitt (11; 111) oder dem Basisabschnitt (10; 110) in Kontakt gelangt.

14. System mit
einer Vorrichtung (1; 101) nach einem der vorangehenden Ansprüche, und
einem Kotflügel (20; 120),
wobei der Kotflügel eine Führungsnut mit einem T-förmigen Querschnitt hat, in der einer von dem ersten oder zweiten Klemmabschnitt geführt ist und damit klemmbar ist.

## Claims

1. Device (1; 101) for fastening two components together, which has the following:
a base portion (10; 110);
a first clamping portion (11; 111);
a second clamping portion (12; 112); and
at least one force application element (13);
wherein
the first clamping portion (11; 111) is provided on one side of the base portion (10; 110) and is suitable for clamping a first component between itself and the base portion,
the second clamping portion (12; 112) is provided on the other side of the base portion (10; 110), which is provided on the opposite side from the one side, and is suitable for clamping a second component between itself and the base portion,
the force application element (13) extends from the first clamping portion (11; 111), through the base portion (10; 110), to the second clamping portion (11; 111) and is capable of generating a force by way of which the first and the second clamping portion are moved towards one another, and
the force application element (13) does not project beyond one of the outer faces of the first or second clamping portion, which is on the opposite side from the face of the first or second clamping portion that faces the base portion (10; 110),
**characterized in that**,
on the side that faces the base portion (10; 110), the first clamping portion (11; 111) has protrusions (11V; 111V) projecting towards the base portion at the edges provided in the transverse direction, and,
on the side that faces the first clamping portion (11; 111), the base portion (10; 110) has protrusions (10V; 110V) projecting towards the first clamping portion (11; 111) at the edges provided in the transverse direction,
wherein protrusions (11V; 111V) of the first clamping portion (11, 111) are offset in the transverse direction of the device with respect to protrusions (10V; 110V) of the base portion (10; 110).

2. Device (1; 101) according to Claim 1, wherein the first clamping portion (11; 111) and/or the second clamping portion (12; 112) are formed in one piece with the base portion (10; 110).

3. Device (1; 101) according to Claim 1, wherein the first clamping portion (11; 111), the second clamping portion (12; 112) and the base portion (10; 110) are each provided as separate components that are able to be brought into engagement with one another.

4. Device (1; 101) according to one of Claims 1 to 3, wherein the force application element (13) has at least one rod-shaped portion (14) that passes through the base portion (10; 110).

5. Device (1; 101) according to one of Claims 1 to 4, wherein the rod-shaped portion (14) of the force application element (13) is formed in one piece with one of the first or second clamping portion on one side of the force application element (13).

6. Device (1; 101) according to one of Claims 1 to 4, wherein the force application element (13) is in the form of a separate component that is connected to one of the first or second clamping portion in a form-fitting manner on one side of the force application element (13).

7. Device (1; 101) according to Claim 5 or 6, wherein the other side of the force application element (13) is provided with a thread and a nut is able to be screwed onto the thread such that both the first clamping portion (11; 111) and the second clamping portion (12; 112) are moved towards the base portion (10; 110).

8. Device (1; 101) according to Claim 5 or 6, wherein the other side of the force application element (13) is provided with a quick clamping device such that both the first clamping portion (11; 111) and the second clamping portion (12; 112) are moved towards the base portion (10; 110) .

9. Device (1; 101) according to one of the preceding claims, wherein one clamping portion is formed in one piece with the base portion (10; 110), and wherein the other clamping portion and the base portion (10; 110) have an engagement mechanism that is different from the force application element (13) and is capable of preventing any moving apart of the other clamping portion and the base portion (10; 110).

10. Device (1; 101) according to one of the preceding claims, wherein one of the first or the second clamping portion is configured such that a cylindrical component can be clamped between the one clamping portion and the base portion (10; 110).

11. Device (1; 101) according to Claim 10, wherein a thin layer of rubber is provided between the clamping portion and/or base portion (10; 110) and the cylindrical component to be clamped.

12. Device (1; 101) according to one of the preceding claims, wherein one of the first or the second clamping portion has a through-hole with a large-diameter part, through which a mushroom-shaped engagement portion of the base part (10; 110) can be inserted, and a small-diameter part, towards which the mushroom-shaped engagement portion of the base portion (10; 110) can be moved such that the base portion (10; 110) and the clamping portion can no longer move apart from one another.

13. Device (1; 101) according to one of the preceding claims, wherein one of the first clamping portion (11; 111) or the base portion (10; 110) has, centrally in the transverse direction thereof, which is provided perpendicularly to the longitudinal direction thereof, a bar-like elevation (111b, 111c) that projects towards the other of the first clamping portion (11; 111) or the base portion (10; 110), such that, upon clamping actuation, the bar-like elevation (111b, 111c) comes into contact with the other of the first clamping portion (11; 111) or the base portion (10; 110).

14. System having
a device (1; 101) according to one of the preceding claims, and
a vehicle wing (20; 120),
wherein the wing has a guide slot with a T-shaped cross section, in which one of the first or second clamping portion is guided and is clampable with respect thereto.

## Revendications

1. Dispositif (1 ; 101) de fixation de deux composants l'un à l'autre, le dispositif comprenant :
une partie de base (10 ; 110) ;
une première partie de serrage (11 ; 111) ;
une deuxième partie de serrage (12 ; 112) ; et
au moins un élément d'application de force (13) ;
la première partie de serrage (11 ; 111) étant prévue sur un côté de la partie de base (10 ; 110) et étant adaptée pour serrer un premier composant entre elle-même et la partie de base,
la deuxième partie de serrage (12 ; 112) étant prévue sur l'autre côté de la partie de base (10 ; 110), prévu à l'opposé de l'un des côtés, et étant adaptée pour serrer un deuxième composant entre elle-même et la partie de base,
l'élément d'application de force (13) s'étendant de la première partie de serrage (11 ; 111) à travers la partie de base (10 ; 110) jusqu'à la deuxième partie de serrage (11 ; 111) et étant capable de générer une force qui permet de rapprocher la première partie de serrage et la deuxième partie de serrage l'une de l'autre, et
l'élément d'application de force (13) ne faisant pas saillie de l'une des surfaces extérieures de la première partie de serrage ou de la deuxième partie de serrage, laquelle surface extérieure est opposée à la surface de la première partie de serrage ou de la deuxième partie de serrage, laquelle surface est tournée vers la partie de base (10 ; 110),
**caractérisé en ce que**
la première partie de serrage (11 ; 111) comporte, du côté tourné vers la partie de base (10 ; 110), au niveau des bords prévus dans la direction transversale, des saillies (11V ; 111V) qui s'étendent en direction de la partie de base ;
la partie de base (10 ; 110) comporte, du côté tourné vers la première partie de serrage (11 ; 111), au niveau des bords prévus dans la direction transversale, des saillies (10V ; 110V) qui s'étendent en direction de la première partie de serrage (11 ; 111) ;
les saillies (11V ; 111V) de la première partie de serrage (11 ; 111) étant décalées des saillies (10V ; 110V) de la partie de base (10 ; 110) dans la direction transversale du dispositif.

2. Dispositif (1 ; 101) selon la revendication 1, la première partie de serrage (11 ; 111) et/ou la deuxième partie de serrage (12 ; 112) étant conçues d'une seule pièce avec la partie de base (10 ; 110).

3. Dispositif (1 ; 101) selon la revendication 1, la première partie de serrage (11 ; 111), la deuxième partie de serrage (12 ; 112) et la partie de base (10 ; 110) étant chacune prévues sous la forme de composants séparés pouvant s'engager l'un dans l'autre.

4. Dispositif (1 ; 101) selon l'une des revendications 1 à 3, l'élément d'application de force (13) comportant au moins une partie (14) en forme de barre qui traverse la partie de base (10 ; 110).

5. Dispositif (1 ; 101) selon l'une des revendications 1 à 4, la partie (14) en forme de barre de l'élément d'application de force (13) étant conçue d'une seule pièce avec l'une des première ou deuxième parties de serrage sur un côté de l'élément d'application de force (13) .

6. Dispositif (1 ; 101) selon l'une des revendications 1 à 4, l'élément d'application de force (13) étant conçu comme un élément séparé qui est relié par complémentarité de formes avec l'une des première ou deuxième parties de serrage sur un côté de l'élément d'application de force (13) .

7. Dispositif (1 ; 101) selon la revendication 5 ou 6, l'autre côté de l'élément d'application de force (13) étant pourvu d'un filetage et un écrou pouvant être vissé sur le filetage de manière à rapprocher la première partie de serrage (11 ; 111) et la deuxième partie de serrage (12 ; 112) de la partie de base (10 ; 110).

8. Dispositif (1 ; 101) selon la revendication 5 ou 6, l'autre côté de l'élément d'application de force (13) étant muni d'un dispositif de serrage rapide de manière à rapprocher la première partie de serrage (11 ; 111) et la deuxième partie de serrage (12 ; 112) de la partie de base (10 ; 110).

9. Dispositif (1 ; 101) selon l'une des revendications précédentes, une partie de serrage étant conçue d'une seule pièce avec la partie de base (10 ; 110) et l'autre partie de serrage et la partie de base (10 ; 110) comportant un mécanisme d'engagement qui est différent de l'élément d'application de force (13) et qui est capable d'empêcher l'écartement de l'autre partie de serrage et de la partie de base (10 ; 110).

10. Dispositif (1 ; 101) selon l'une des revendications précédentes, l'une des première et deuxième parties de serrage étant conçue de telle sorte qu'un composant cylindrique puisse être serré entre la première partie de serrage et la partie de base (10 ; 110).

11. Dispositif (1 ; 101) selon la revendication 10, une fine couche de caoutchouc étant prévue entre la partie de serrage et/ou la partie de base (10 ; 110) et l'élément cylindrique à serrer.

12. Dispositif (1 ; 101) selon l'une des revendications précédentes, l'une parmi la première partie de serrage et la deuxième partie de serrage comportant un trou traversant pourvu d'une partie de grand diamètre, à travers laquelle une partie d'engagement fongiforme de la partie de base (10 ; 110) peut être insérée, et d'une partie de petit diamètre en direction de laquelle la partie d'engagement fongiforme de la partie de base (10, 110) peut coulisser de manière à ce que la partie de base (10, 110) et la partie de serrage ne puissent plus s'écarter l'une de l'autre.

13. Dispositif (1 ; 101) selon l'une des revendications précédentes, l'une parmi la première partie de serrage (11 ; 111) ou la partie de base (10 ; 110) comportant au centre, dans sa direction transversale perpendiculaire à sa direction longitudinale, une élévation (111b, 111c) de type nervure qui fait saillie en direction de l'autre parmi la première partie de serrage (11 ; 111) ou la partie de base (10 ; 110) de telle sorte que, lors d'une opération de serrage, l'élévation (111b, 111c) de type nervure vienne en contact avec l'autre parmi la première partie de serrage (11 ; 111) ou la partie de base (10 ; 110) .

14. Système comprenant
un dispositif (1 ; 101) selon l'une des revendications précédentes, et
une aile (20 ; 120),
l'aile comportant une rainure de guidage qui a la forme d'un T en coupe transversale et dans laquelle l'une parmi la première partie de serrage ou la deuxième partie de serrage est guidée et peut donc être serrée.
